# EUROPEAN PATENT APPLICATION

(11) **EP 4 726 949 A1**
(43) Date of publication of application: **15.04.2026**
(21) Application number: 23940234.0
(22) Date of filing: 28.06.2023
(51) Int. Cl.: H02J 3/38

(54) **PHOTOVOLTAIC SYSTEM AND OPTIMIZER NETWORKING METHOD THEREFOR**

(30) Priority: 07.06.2023 CN 202310673746
(71) Applicant: Sungrow (Shanghai) Co., Ltd., Shanghai 201107 (CN)
(72) Inventor: YAO, Keliang, Shanghai 201107 (CN); HE, Yi, Shanghai 201107 (CN); YANG, Yu, Shanghai 201107 (CN); ZHANG, Tianzhu, Shanghai 201107 (CN); YANG, Hui, Shanghai 201107 (CN); ZHANG, Gan, Shanghai 201107 (CN); TIAN, Jianye, Shanghai 201107 (CN); CHEN, Shangwen, Shanghai 201107 (CN)
(74) Representative: Epping - Hermann - Fischer
(86) International application number: PCT/CN2023/103117
(87) International publication number: WO 2024/250353

(57) **Abstract**

Provided in the present application are a photovoltaic system and an optimizer networking method therefor. In the optimizer networking method, after an inverter controls optimizers to start, the inverter controls Boost circuits one by one to respectively execute an IV scanning operation; since when different Boost circuits execute the IV scanning operations, only output characteristics of optimizers in photovoltaic strings connected to input ends of the corresponding Boost circuits change, according to the output characteristics of the optimizers during the respective IV scanning operations, the optimizers can respectively determine the Boost circuits to which the optimizers are connected; and then, the inverter acquires determination results of the optimizers, such that a correspondence between the Boost circuits and the optimizers can be obtained, and thus automatic networking of optimizers connected in a photovoltaic system is realized, thereby avoiding the problems of the efficiency being low and errors being prone to occur when optimizer networking is implemented by means of manual entry.

## Description

The present application claims priority to Chinese Patent Application No. 202310673746.8, titled "PHOTOVOLTAIC SYSTEM AND OPTIMIZER NETWORKING METHOD THEREFOR", filed on June 7, 2023 with the China National Intellectual Property Administration, which is incorporated herein by reference in its entirety.

### FIELD

The present application relates to the technical field of photovoltaic power generation, and in particular to a photovoltaic system and an optimizer networking method for a photovoltaic system.

### BACKGROUND

An optimizer in a photovoltaic system, namely a photovoltaic power optimizer, is a module-level power electronics (MLPE) device with a direct-current input and a direct-current output. The optimizer is connected in series with a photovoltaic component, and a current and voltage prediction technology is adopted to ensure that the photovoltaic component always operates in an optimal state, to address the impact of shadow on the photovoltaic components, inconsistent orientations or a difference in electrical specifications of photovoltaic components on power generation capacity in a photovoltaic power station. In this way, a maximum power output of the photovoltaic component can be achieved and power generation capacity of the system can be improved.

In a photovoltaic power generation system provided with an optimizer, an inverter communicates with the optimizer through power line communication (PLC). The inverter includes a master node controller of the PLC, and the optimizer serves as a slave node of the PLC. Once the optimizer and the inverter are arranged in the system, the master node of the inverter needs to determine topological position of each optimizer in the inverter system, to facilitate instruction control and state positioning in a subsequent operation process. If the inverter lacks the topological position of the optimizer, the inverter may acquire information of optimizers in other systems due to crosstalk during searching for the optimizers, leading to erroneous determination and control over optimizers by the master node.

At present, the topological position of each optimizer is manually entered in order. In this manner, the manual entry process in the optimizer networking has a low inefficient and is prone to error.

### SUMMARY

A photovoltaic system and an optimizer networking method for a photovoltaic system are provided according to the present disclosure, to address the issue of low efficiency and error in the optimizer networking process due to manual entry.

To achieve the above objectives, following technical solutions are provided according to the present disclosure.

In a first aspect, an optimizer networking method for a photovoltaic system is provided according to the present disclosure, where the photovoltaic system includes an inverter and photovoltaic strings connected to Boost circuits at a preceding stage of a direct-current bus of the inverter, and the optimizer networking method includes:
controlling, by the inverter, optimizers to start;
performing, by the inverter, an IV scan operation on the Boost circuits one by one;
determining, by each of the optimizers, a Boost circuit connected to the optimizer based on output characteristics of the optimizer during respective IV scan operations; and
obtaining, by the inverter, determination results from the optimizers, to obtain a correspondence between the Boost circuits and the optimizers.

In an embodiment, the output characteristic includes at least one of a disturbance characteristic of an output voltage and a disturbance characteristic of an output current.

In an embodiment, the determining, by each of the optimizers, a Boost circuit connected to the optimizer based on output characteristics of the optimizer during respective IV scan operations includes: for each of the optimizers, receiving, by the optimizer from the inverter, a topology determination instruction and Boost channel numbers of the respective Boost circuits in the respective IV scan operations; determining, by the optimizer, the Boost channel number of the Boost circuit connected to the optimizer based on the output characteristics of the optimizer; and storing, by the optimizer, the determined Boost channel number.

In an embodiment, before the performing, by the inverter, an IV scan operation on the Boost circuits one by one, the optimizer networking method further includes: controlling, by the inverter, each optimizer to clear the Boost channel number stored by the optimizer.

In an embodiment, before the performing, by the inverter, an IV scan operation on the Boost circuits one by one, the optimizer networking method further includes: controlling the inverter to operate in a grid-connected state.

In an embodiment, during the performing, by the inverter, an IV scan operation on each of the Boost circuits, the optimizer networking method further includes: setting, by the inverter, at least one of an output voltage limit and an output current limit for each optimizer to satisfy an IV scan condition.

In an embodiment, the controlling, by the inverter, optimizers to start includes: for each of the optimizers, sending, by the inverter, an activation instruction to the optimizer to enable the optimizer to be in an operating mode; and performing a soft start on the optimizer to increase an output voltage of the optimizer.

In an embodiment, during the controlling, by the inverter, optimizers to start, the optimizer networking method further includes: setting, by the inverter, at least one of an output voltage limit and an output current limit for each optimizer; for each of two preset values, obtaining, by the inverter, a voltage at an input end of each of the Boost circuits when the output voltage of each optimizer stabilizes at the preset value; and determining, by the inverter based on a variation of the voltage at the input end of each of the Boost circuits, whether each photovoltaic component in the photovoltaic string connected to each Boost circuit is provided with an optimizer.

In an embodiment, after obtaining the correspondence between the Boost circuits and the optimizers, the optimizer networking method further includes: performing, by the inverter, a pulse blocking operation on the Boost circuits one by one; and during the pulse blocking operation on each of the Boost circuits, changing, by the inverter, an output voltage of one of the optimizers connected to the Boost circuit at least once; and determining the photovoltaic string corresponding to each of the optimizers based on an electrical state of the optimizer.

In an embodiment, the changing the output voltage includes active bypass, where the electrical state is an output current.

In an embodiment, before the controlling, by the inverter, optimizers to start, the optimizer networking method further includes: performing, by the inverter, communication association numbering configuration on each of the optimizers.

In an embodiment, before the controlling, by the inverter, optimizers to start, the optimizer networking method further includes: obtaining, by the inverter, serial numbers of the optimizers; determining, by the inverter, whether manually entered topological positions are received, wherein the process of controlling, by the inverter, optimizers to start is performed when the topological positions are not received; and determining by the inverter, when the topological positions are received, whether the serial numbers match the topological positions, wherein the process of controlling, by the inverter, optimizers to start is performed when the serial numbers do not match the topological positions.

In an embodiment, before the controlling, by the inverter, optimizers to start, the optimizer networking method further includes: obtaining, by the inverter, serial numbers of the optimizers; determining, by the inverter, whether there is a serial number that is not previously stored among the serial numbers; determining by the inverter, when there is the serial number that is not previously stored, whether the number of the serial number that is not previously stored is less than a predetermined number or whether the inverter operates in a grid-connected state, where the process of controlling, by the inverter, optimizers to start is performed when the number of the serial number that is not previously stored is less than the predetermined number or the inverter operates in the grid-connected state.

In a second aspect, a photovoltaic system is provided according to the present disclosure. The photovoltaic system includes an inverter and at least one photovoltaic string, where
the at least one photovoltaic string each is provided with one or more optimizers at two terminals of the photovoltaic string, output terminals of the one or more optimizers are connected in series, and an input end of each of the one or more optimizers is connected to at least one photovoltaic component;
a preceding stage of a direct-current bus of the inverter is configured to connect to at least one Boost circuit, and an input end of each of the at least one Boost circuit is configured to connect to the at least one photovoltaic string; and
the inverter includes a controller serving as a master node to communicate with the optimizer, and the controller is configured to perform the optimizer networking method for a photovoltaic system according to the first aspect.

In an embodiment, the at least one Boost circuit each is independent of the inverter; or the at least one Boost circuit each is integrated in the inverter, and an output end of the Boost circuit is connected to a direct-current side of an inverter circuit in the inverter through the direct-current bus.

In the optimizer networking method for a photovoltaic system according to the present disclosure, after the inverter controls optimizers to start, the inverter perform an IV scan operation on the Boost circuits one by one. During the IV scan operation on a Boost circuit, only output characteristics of optimizers in the photovoltaic string connected to the input end of the Boost circuit change accordingly, while output characteristics of optimizers in other photovoltaic strings do not change accordingly, and thus each of the optimizers determines a Boost circuit connected to the optimizer based on output characteristics of the optimizer during respective IV scan operations. Then, the inverter obtains determination results from the optimizers, to obtain a correspondence between the Boost circuits and the optimizers. In this way, the automatic networking of the optimizers in the photovoltaic system is implemented, addressing the issue of low efficiency and error in the optimizer networking process due to the manual entry.

### BRIEF DESCRIPTION OF THE DRAWINGS

In order to more clearly illustrate technical solutions in embodiments of the present disclosure or in the conventional technology, the drawings to be used in the description of the embodiments or the conventional technology are briefly described below. Apparently, the drawings in the following description show only embodiments of the present disclosure, and other drawings may be obtained by those skilled in the art from the provided drawings without any creative work.
FIG. 1 is a flowchart of an optimizer networking method for a photovoltaic system according to an embodiment of the present disclosure;
FIG. 2 is a flowchart showing a part of an optimizer networking method for a photovoltaic system according to an embodiment of the present disclosure;
FIG. 3 is a flowchart of an optimizer networking method for a photovoltaic system according to another embodiment of the present disclosure;
FIG. 4 is a flowchart of an optimizer networking method for a photovoltaic system according to another embodiment of the present disclosure;
FIG. 5 is a flowchart of an optimizer networking method for a photovoltaic system according to another embodiment of the present disclosure;
FIG. 6 is a schematic structural diagram of a photovoltaic system according to an embodiment of the present disclosure;
FIG. 7 is a schematic structural diagram of a photovoltaic string according to an embodiment of the present disclosure; and
FIG. 8 is a schematic structural diagram of a photovoltaic system according to an embodiment of the present disclosure.

### DETAILED DESCRIPTION

Technical solutions of embodiments of the present disclosure are clearly and completely described hereinafter in conjunction with the drawings of the embodiments of the present disclosure. Apparently, the embodiments described in the following are only some embodiments of the present disclosure, rather than all embodiments. Any other embodiments obtained by those skilled in the art based on the embodiments in the present disclosure without any creative work fall within the protection scope of the present disclosure.

In the present disclosure, terms "include", "comprise" or any other variants thereof are intended to be non-exclusive. Therefore, a process, method, article or device including a series of elements include not only these elements but also other elements that are not clearly enumerated, or further include elements inherent in the process, method, article or device. Unless expressively limited, the statement "including a..." does not exclude the case that other similar elements may exist in the process, method, article or device including the series of elements.

An optimizer networking method for a photovoltaic system is provided according to the present disclosure, to address the issue of low efficiency and error in the optimizer networking process due to manual entry.

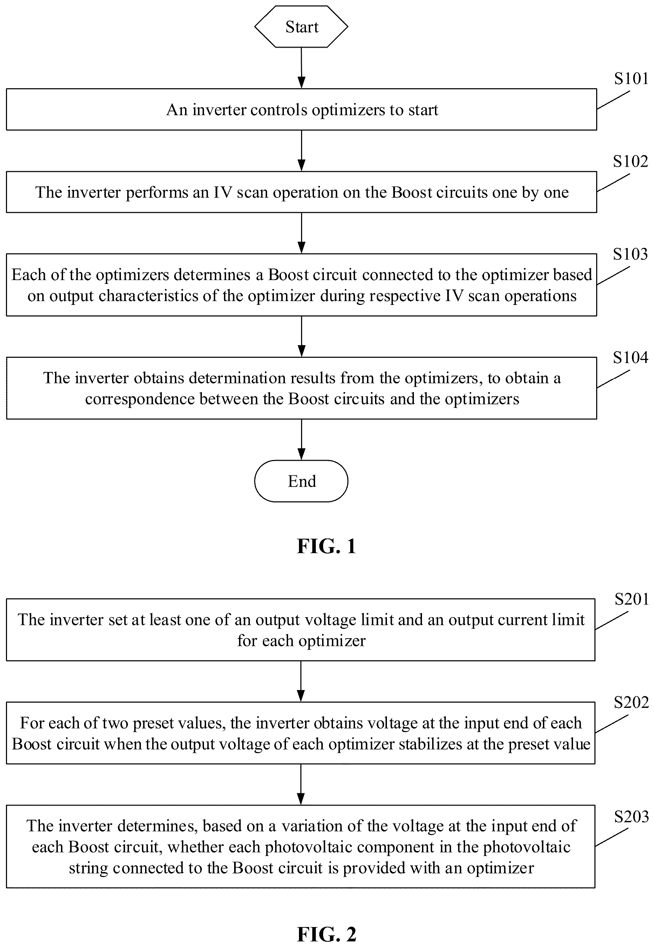

The photovoltaic system includes an inverter and photovoltaic strings connected to input ends of Boost circuits at a preceding stage of a direct-current bus of the inverter. Referring to FIG. 1, the optimizer networking method for a photovoltaic system includes the following steps S101 to S104.

In step S101, the inverter controls optimizers to start.

In practice, the master node of the inverter broadcasts an activation instruction to each optimizer. On receipt of the activation instruction, the optimizer enters an operating mode, and a soft start is performed on the optimizer to gradually increase an output voltage of the optimizer. If the inverter does not set an output voltage limit Ulmt for each of the optimizers, the output voltage of each optimizer may be gradually increased to a rated output voltage. If the inverter has set the output voltage limit Ulmt for each of the optimizers, the output voltage of each optimizer is gradually increased to the output voltage limit Ulmt after the optimizer is started, reducing the voltage and improve safety, as well as facilitating the subsequent determination on the number of the optimizers in the photovoltaic strings.

In step S102, the inverter performs an IV scan operation on the Boost circuits one by one.

In the photovoltaic system, a main node of the inverter may determine, according to a predetermined sequence, such as a numbered sequence of the Boost circuits in software, one Boost circuit at the preceding stage of the direct-current bus of the inverter, and performs an IV scan operation on the determined Boost circuit.

In step S103, each of the optimizers determines a Boost circuit connected to the optimizer based on output characteristics during respective IV scan operations.

The output characteristic may be a disturbance characteristic of the output voltage, a disturbance characteristic of the output current, or both the two disturbance characteristics. The output characteristic may be determined according to an application environment and all implementations fall within the protection scope of the present disclosure.

During an IV scan operation on any one Boost circuit, output characteristics of the optimizers in the photovoltaic string connected to the input end of the Boost circuit change accordingly, while output characteristics of optimizers in other photovoltaic strings do not change accordingly. Therefore, during the IV scan operation on each Boost circuit, each optimizer may determine a Boost circuit connected to the optimizer based on the output characteristics of the optimizer.

In practice, each optimizer may receive, from the inverter, a topology determination instruction and Boost channel numbers of the respective Boost circuits in the respective IV scan operations. Subsequently, each optimizer detects an output characteristic of the optimizer in response to the topology determination instruction, then determines the Boost channel number of the Boost circuit connected to the optimizer based on the output characteristic, and stores the determined Boost channel number.

Since each optimizer stores a Boost channel number determined through IV scan in a previous intelligent networking, that is, the Boost channel number stored by the optimizer is not empty, the IV scan operation and correspondence determining operation are not performed in a case that the Boost channel number is not empty, affecting a next intelligent networking. Therefore, in an embodiment, before step S102, the inverter controls each optimizer to clear the Boost channel number stored by the optimizer, thus ensuring that the Boost channel number determined currently may be stored through steps S102 and S 103.

In step S104, the inverter obtains determination results from the optimizers, to obtain a correspondence between the Boost circuits and the optimizers.

The determination results from the optimizers are the Boost channel numbers determined by the optimizers. The inverter obtains the Boost channel number stored by each optimizer, and then gathers all Boost channel numbers to obtain the correspondence between the Boost circuits and the optimizers, thereby implementing the current intelligent networking.

With the optimizer networking method for a photovoltaic system according to this embodiment, when the IV scan operation is performed on any one Boost circuit, an output characteristic of the optimizer connected to the Boost circuit is different from an output characteristic of other optimizer, thus automatically determining the optimizer connected to the Boost circuit. The Boost circuits are controlled one by one, to establish a correspondence between the optimizers and the respective Boost circuits, thereby implementing the automatic networking of the optimizers in the photovoltaic system, and addressing the issue of low efficiency and error in the optimizer networking process due to the manual entry. Moreover, when the inverter erroneously communicates with an optimizer that does not belong to the photovoltaic system due to crosstalk, it can be found that the output characteristic of the optimizer does not change with the IV scan operation on any one Boost circuit through the above steps, thus determining the optimizer that does not belong to the photovoltaic system and erroneously communicates with the inverter due to crosstalk.

Moreover, the optimizer networking method is implemented though IV scan, such that the optimizers can be located and networked during the grid-connected operation of the inverter without shutting down the inverter, thereby improving the power generation efficiency.

Based on the above embodiment, in an embodiment, during the step S101, the optimizer networking method for a photovoltaic system further includes the following steps S201 to S203 shown in FIG. 2.

In step S201, the inverter sets at least one of an output voltage limit and an output current limit for each optimizer.

In practice, after an optimizer has just been arranged, the optimizer may enter a safe mode or a shutdown mode when a photovoltaic component connected to an input end of the optimizer supplies a normal operation voltage to the optimizer. In this case, a first output voltage limit Ulmt may be set to maintain the output voltage of each optimizer at the first output voltage limit, such as 0.5V. Then, the master node of the inverter sends a networking-mode configuration instruction to each optimizer. The networking-mode configuration instruction includes at least one of a second output voltage limit Ulmt and an output current limit Ilmt, thus implementing the limit on the output voltage and the output current of each optimizer.

After the inverter sets the second output voltage limit Ulmt for each optimizer, if the output voltage of each optimizer is equal to the output voltage limit Ulmt, a voltage of a photovoltaic string including n optimizers with output terminals connected in series is equal to n×Ulmt. A soft start is performed on each optimizer to gradually increase the output voltage of the optimizer until the output voltage reaches the second output voltage limit Ulmt. In practice, the second output voltage limit Ulmt is determined based on a minimum start-up voltage of the inverter, the voltage n×Ulmt of the photovoltaic string should exceed the minimum start-up voltage of the inverter. In addition, a power generation efficiency is taken into account for the optimizer with a buck topology, the duty cycle is too small if the output voltage limit Ulmt is set to low, which easily cause a current limitation on the inverter, resulting in a low power generation efficiency and an incomplete IV scan. In addition, a scanning manner is taken into account, during the IV scan operation on the Boost circuit, the voltage of the photovoltaic string connected to the inverter should be below a threshold of an IV scan, that is, a direct-current bus voltage. Therefore, the second output voltage limit Ulmt may be set according to actual requirements and is not limited herein.

The inverter sets the output current limit Ilmt for each optimizer, ensuring that output current of the optimizer does not exceed the output current limit Ilmt, thus ensuring the safety of the optimizer.

In step S202, for each of two preset values, the inverter obtains the voltage at the input end of each Boost circuit when the output voltage of each optimizer stabilizes at the preset value.

The two preset values may refer to the first output voltage limit Ulmt and the second output voltage limit Ulmt. The inverter reads the voltage n×Ulmt at the input end of each Boost circuit twice and records the voltage n×Ulmt. After that, the inverter may determine the number n of optimizers in the photovoltaic string connected to the input end of each Boost circuit.

In step S203, the inverter determines, based on a variation of the voltage at the input end of each Boost circuit, whether each photovoltaic component in the photovoltaic string connected to the Boost circuit is provided with an optimizer.

The main node of the inverter calculates a difference between stored voltages sampled at the input end of each Boost circuit before and after the optimizer is started, to determine whether the input end of each Boost circuit is connected with a photovoltaic string, and to determine each photovoltaic component in the photovoltaic string is provided with the optimizer, or a part of the photovoltaic components in the photovoltaic string is provided with the optimizer.

Moreover, in the optimizer networking method for a photovoltaic system, the main node of the inverter may perform the step S102 after the inverter operates in the grid-connected state and a MPPT (Maximum Power Point Tracking) state is stable.

In addition, the IV scan operation on the Boost circuits has a requirement for a voltage range of the MPPT. Therefore, the main node of the inverter adaptively sets the output voltage limit and an output current limit for the optimizers to satisfy an IV scan condition. That is, in the step S102, the inverter performs the IV scan operation on each of the Boost circuits, the inverter may set at least one of an output voltage limit Ulmt and an output current limit Ilmt for each optimizer to satisfy the IV scan condition.

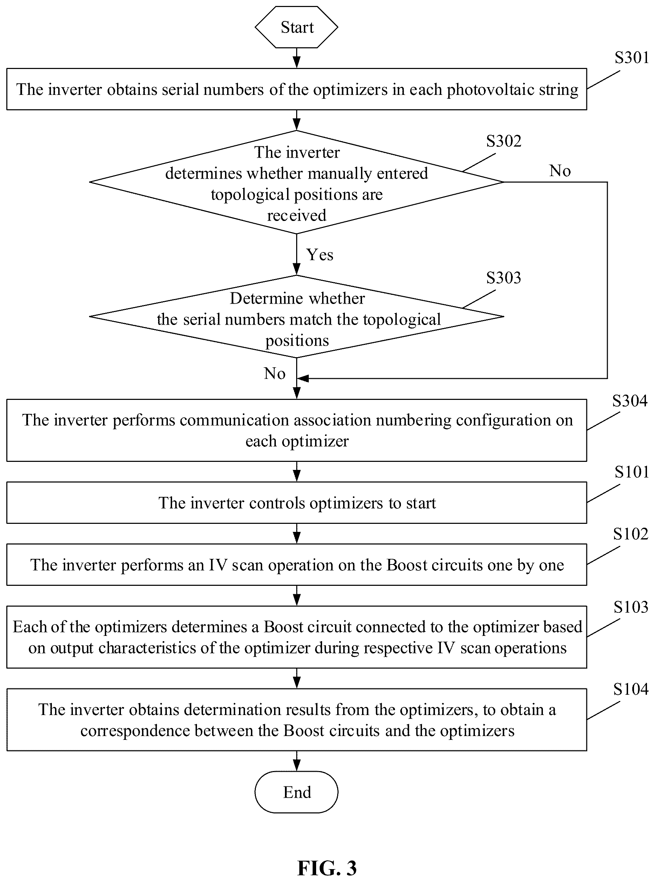

Based on the above embodiment, in an embodiment as shown in FIG. 3, before step S101, the optimizer networking method for a photovoltaic system further includes the following steps S301 to S303.

In step S301, the inverter obtains serial numbers of the optimizers.

The serial number refers to an SN number, namely, serial no, which is a unique number of each optimizer. The inverter obtains the serial number of each optimizer to distinguish the optimizers from each other.

In practice, once the master node of the inverter is powered on, the master node actively searches for optimizers, that is, sends a search instruction to the optimizers. On receipt of the search instruction from the inverter, the optimizer sends the serial number of the optimizer to the master node of the inverter.

In addition, after step S104, the topological position of each optimizer may be determined based on the serial number, to generate an automatic networking result for the optimizers.

In step S302, the inverter determines whether manually entered topological positions are received.

In a case that the topological positions are not received, step S101 is performed. In a case that the topological positions are received, step S303 is performed.

In step S303, the inverter determines whether the serial numbers match the topological positions.

In a case that the serial numbers do not match the topological positions, step S101 is performed.

That is, after step S301, in a case that the master node of the inverter receives no manually entered topological position from the cloud, or in a case that the obtained serial numbers of the optimizers do not match the topological positions, a subsequent automatic networking process is performed.

In practice, a trigger condition of starting the automatic networking process is provided in this embodiment. In a case that the trigger condition is not met, the automatic networking process may not be performed. Thus, the networking process after the inverter is provided may be determined according to the actual situation, which broadens the application scene.

In practice, the trigger condition may include: directly sending, by the master node of the inverter, a networking-mode configuration instruction to the optimizers. In this case, the optimizer networking method for a photovoltaic system may be started from the step S101, depending on the actual application environment. All implementations fall within the protection scope of the present disclosure.

In an embodiment, step S304 shown in FIG. 3 may be performed prior to step S101, in order to simplify and accelerate communication between the master node of the inverter and the optimizers.

In step S304, the inverter performs communication association numbering configuration on each optimizer.

In this step, the master node of the inverter performs association configuration for each optimizer and assigns a temporary short number to each optimizer to replace the SN number for communication. This short number may include a string number and a module number. The string number may be numbered from 200, which is not limited herein.

For example, as shown in FIG. 3, an automatic networking process for the photovoltaic system in which each photovoltaic component is provided with an optimizer is illustrated using the above optimizer networking method, and the automatic networking process includes the following steps.

### (1) Optimizer search.

Once the main node of the inverter is powered on, the main node actively searches for optimizers. On receipt of a search instruction from the inverter, the optimizer sends a serial number of the optimizer to the main node of the inverter. When the master node of the inverter receives no manually entered topological position from a cloud, or when the searched serial number of the optimizer does not match the topological position, the photovoltaic system enters the automatic networking process.

### (2) Optimizer configuration.

The master node of the inverter performs communication association numbering configuration on each optimizer and assigns a temporary short number to each optimizer, thus achieving a convenient communication between the master node and the optimizers.

### (3) Optimizer start.

The master node of the inverter sets a first output voltage limit Ulmt 0.5V for the optimizer by broadcasting. The master node of the inverter activates the optimizers, and then reads and records a voltage at an input end of each Boost circuit. Subsequently, the master node of the inverter broadcasts twice to adaptively set a second output voltage limit Ulmt and an output current limit Ilmt for the optimizer. The master node of the inverter activates the optimizers, and a soft start is performed on the optimizers to gradually increase the output voltage of each optimizer until the output voltage reaches the second output voltage limit Ulmt. After all optimizers are started, the master node of the inverter reads and records a voltage at the input end of each Boost circuit again.

After that, the main node of the inverter calculates a difference between stored voltages sampled at the input end of each Boost circuit before and after each optimizer is started, to determine whether a photovoltaic string connected to the input end of each Boost circuit includes the optimizer, and to determine each photovoltaic component in the photovoltaic string is provided with the optimizer, or a part of the photovoltaic components in the photovoltaic string is provided with the optimizer.

### (4) Inverter IV Scan.

The master node of the inverter first broadcasts an instruction for clearing a Boost channel number. After the inverter operates in the grid-connected state and a MPPT state is stable, the master node of the inverter determines one Boost circuit from the Boost circuits according to a predetermined sequence, performs an IV scan operation on the determined Boost circuit, and adaptively sets an output voltage limit Ulmt and an output current limit Ilmt for the optimizers to satisfy an IV scan condition. During the IV scan operation on the Boost circuit, the master node of the inverter broadcasts a topology determination instruction to the optimizers. The optimizers automatically determine and store the Boost channel number based on the disturbance characteristic of the output voltage and the disturbance characteristic of the output current. After polling all Boost channels, the master node of the inverter obtains the Boost channel number stored by each optimizer, thereby obtaining a correspondence between the Boost circuits and the optimizers.

This embodiment is applicable to the photovoltaic system in which each photovoltaic component is provided with an optimizer. Through the above four steps of optimizer search, optimizer configuration, optimizer start and inverter IV Scan, during an IV scan operation on each Boost circuit, the optimizer may automatically determine a Boost circuit connected to the optimizer based on the disturbance characteristic of the output voltage and the disturbance characteristic of the output current of the optimizer. The IV scan operation is performed on each Boost circuit, to establish a correspondence between the optimizers and the respective Boost circuits, thus determining an optimizer that does not belong to the photovoltaic system and erroneously communicates with the inverter due to crosstalk, thereby achieving networking of the entire photovoltaic system connected to the inverter. This embodiment may avoid manual entry of information of each optimizer, improving networking efficiency and reducing the probability of error.

It should be noted that in the above embodiment, only the correspondence between the optimizers and the Boost circuits is determined, in the case that the number of photovoltaic strings connected to the Boost circuit is more than one and that the master node of the inverter does not determine which optimizers are in one photovoltaic string, the master node may be difficult to determine a long photovoltaic string, causing that incorrectly issues a limit value. As a result, a sum of output voltages of all optimizers in the photovoltaic string exceeds a voltage withstood by the inverter, resulting in an overvoltage damage to the inverter.

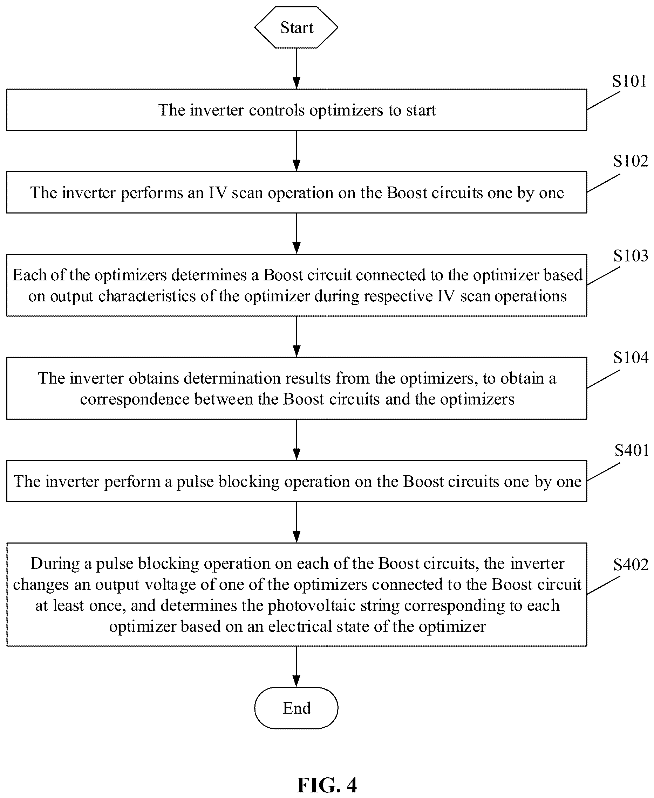

Therefore, based on the above embodiment, another optimizer networking method is further provided according to a preferred embodiment. As shown in FIG. 4 (illustrated based on FIG. 1), after step S104, the optimizer networking method further includes the following steps S401 to S402.

In step S401, the inverter perform a pulse blocking operation on the Boost circuits one by one.

In step S402, during a pulse blocking operation on each of the Boost circuits, the inverter changes an output voltage of one of the optimizers connected to the Boost circuit at least once, and the photovoltaic string corresponding to each optimizer is determined based on an electrical state of the optimizer.

In practice, the changing output voltage may refer to active bypass or changing the output voltage limit Ulmt of the optimizer. Furthermore, the electrical state may be the output current, which is not limited herein, depending on the actual application environment. As long as the implementation manner of the changing output voltage can enable the optimizer and the photovoltaic string corresponding to the optimizer have an identical changing characteristic, the implementation manner falls within the protection scope of the present disclosure.

In an embodiment, when the master node of the inverter perform a pulse blocking operation on the Boost circuits one by one, during the pulse blocking operation on the Boost circuit, the master node of the inverter determines one optimizer from the optimizers connected to the Boost circuit and sends an active bypass instruction to the determined optimizer. Upon receiving the active bypass instruction, the optimizer is switched from the operating mode to the active bypass mode. The optimizer is bypassed to cause the optimizer to have no output voltage, and a voltage of the photovoltaic string corresponding to the optimizer decreases, resulting in a difference between different photovoltaic strings connected in parallel to the same Boost circuit. In this case, the master node of the inverter obtains current states of all optimizers, that is, reads the output current of each optimizer, and reads the current of each photovoltaic string, as well as compares the two currents with each other. If a difference between the output current of the optimizer and the current of a photovoltaic string is less than a predetermined threshold, it is determined that the optimizer corresponds to the photovoltaic string.

In this embodiment, the inverter changes an output voltage of one of the optimizers connected to the Boost circuit each time, actively creates a voltage difference between the photovoltaic strings connected to the Boost circuit, thereby determining the photovoltaic string corresponding to the optimizer. In a case that the number of photovoltaic strings connected to one Boost circuit is more than two, the above process may be repeated on an optimizer whose photovoltaic string is not determined, until all photovoltaic strings connected to the Boost circuit are determined. In this way, the optimizers in the different photovoltaic strings connected to the Boost circuit are automatically distinguished from each other, thus achieving the string-level positioning of the optimizers, which is beneficial to the differential control of the inverter for each photovoltaic string.

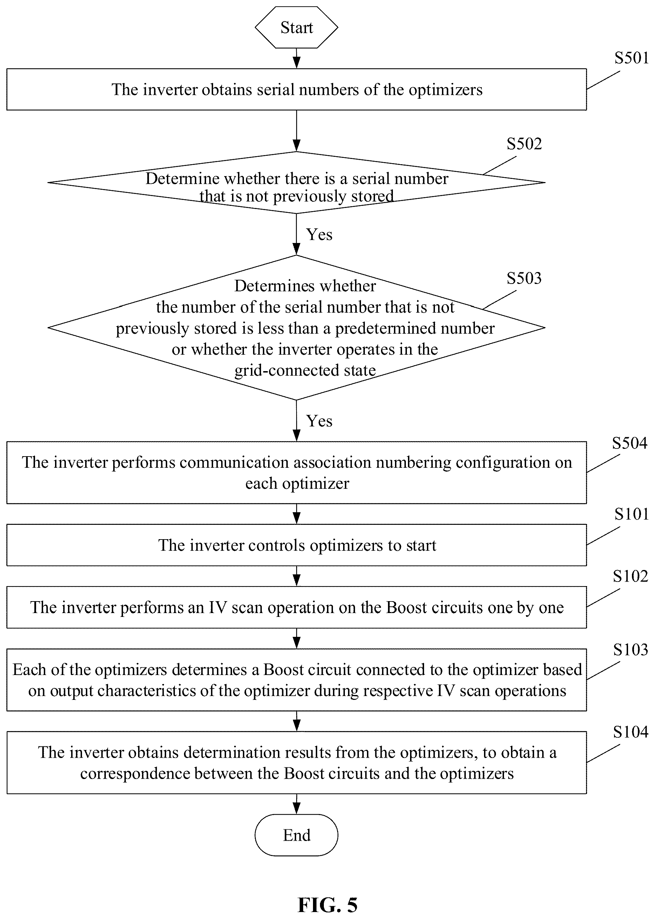

It should be noted that during actual operation of the photovoltaic system, some optimizers may be damaged or a photovoltaic string is expanded. In this case, the damaged optimizer is replaced with another optimizer, or the photovoltaic string is provided with additional optimizer. Therefore, in another embodiment as shown in FIG. 5, before step S101, the optimizer networking method for a photovoltaic system further includes steps S501 to S504.

In step S501, the inverter obtains serial numbers of the optimizers.

In practice, a master node of the inverter may be configured to actively search for information of the optimizer upon initial power-up and at fixed intervals thereafter. Upon receiving a search instruction from the inverter, an optimizer that has not been networked sends the SN number of the optimizer to the master node of the inverter.

In step S502, the inverter determines whether there is a serial number that is not previously stored among the serial numbers.

Upon obtaining information of the optimizer that is not previously stored before, the master node determines that the optimizer is newly added. In a case there is a serial number that is not previously stored, the process goes to step S503.

In step S503, the inverter determines whether the number of the serial number that is not previously stored is less than a predetermined number or whether the inverter operates in the grid-connected state.

In a case that the number of the serial number that is not previously stored is less than the predetermined number or the inverter operates in the grid-connected state, the process goes to step S101.

In a case that the number of the newly added optimizer is less and lower than a preset value (that is, the predetermined number) or the inverter is operating in the grid-connected state, an automatic positioning solution may be triggered to perform steps S101 to S402 shown in FIG. 4 and steps S201 to S203 shown in FIG. 2. Alternatively, as shown in FIG. 5, step S504 is performed first, that is, the inverter performs communication association numbering configuration on each optimizer and then the aforementioned steps (steps S401, S402, and steps S201 to S203 not shown in FIG. 5) are performed.

In a case that the number of the newly added optimizer is large, or the inverter is not operating in the grid-connected state, the master node of the inverter first controls original optimizers that have been networked to start, then the inverter operates normally in the grid-connected state and outputs power. For the newly added optimizer, the master node of the inverter may not send an activation instruction to the optimizer. Alternatively, the newly added optimizer has not been configured by some instructions, and thus automatically remains inactive. At an appropriate time, the master node of the inverter directly sends a networking-mode configuration instruction to each optimizer, which forms a trigger condition of starting the automatic networking process.

In this embodiment, through steps such as the optimizer search, the optimizer configuration, the optimizer start, IV Scan operation on a Boost circuit, pulse blocking on a Boost circuit and optimizer bypass, the optimizer determine a Boost circuit connected to the optimizer based on the disturbance characteristic of the output voltage and the disturbance characteristic of the output current of the optimizer during the IV scan operation on the Boost circuit. In addition, for the newly added optimizer in the system that has been networked, a photovoltaic string corresponding to the newly added optimizer can be automatically determined if the number of the newly added optimizer is less.

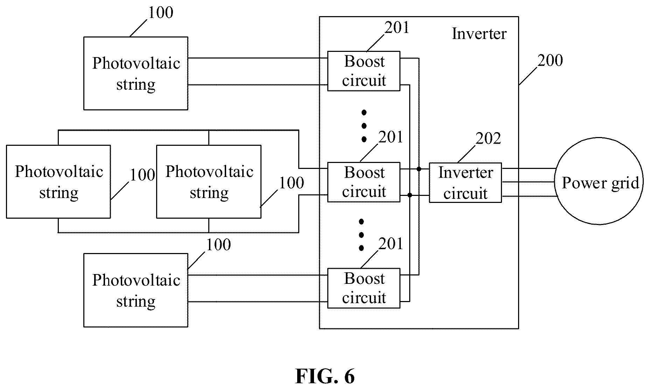

In another embodiment of the present disclosure, a photovoltaic system is provided. As shown in FIG. 6, the photovoltaic system includes an inverter 200 and at least one photovoltaic string 100.

A preceding stage of a direct-current bus of the inverter 200 is configured to connect to at least one Boost circuit 201, and an input end of each Boost circuit 201 is configured to connect to the at least one photovoltaic string 100.

It should be noted that, as shown in FIG. 6, each Boost circuit 201 may be integrated in the inverter 200, and an output end of each Boost circuit 201 is connected to a direct-current side of an inverter circuit 202 in the inverter 200 through the direct-current bus. In practice, each Boost circuit 201 may be independent of the inverter 200 (not shown in drawings), depending on actual application environment. All implementations fall within the protection scope of the present disclosure.

The inverter 200 is connected to a single-phase power grid or a three-phase power grid, depending on a model of the inverter 200.

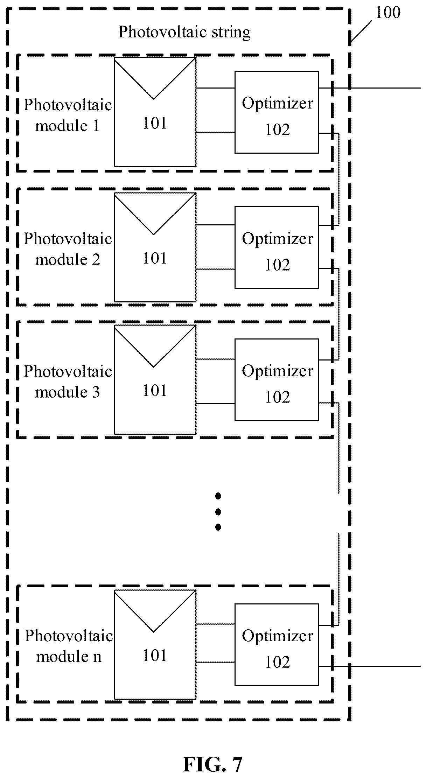

As shown in FIG. 7, the at least one photovoltaic string 100 each is provided with one optimizer 102 or at least two optimizers 102 at two terminals of the photovoltaic string 100, and output terminals of the at least two optimizers 102 are connected in series, and the input end of the optimizer 102 is connected to at least one photovoltaic component 101.

The inverter 200 includes a controller serving as a master node of the inverter in the embodiments described above. The controller communicates with each optimizer 102 and is configured to perform the optimizer networking method for a photovoltaic system according to any one of the embodiments described above. The detailed execution process and principles of the optimizer networking method may be referred to the above embodiments, which are not repeated herein.

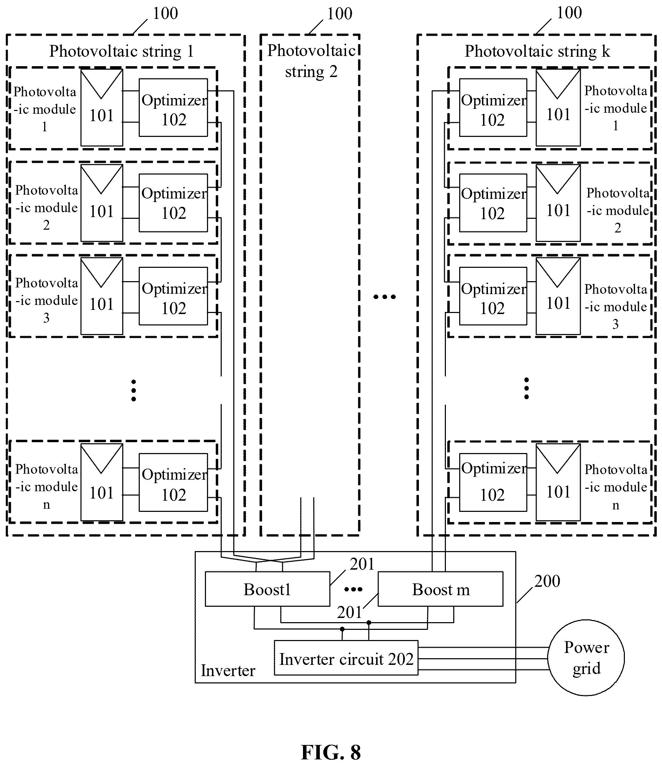

As shown in FIG. 6 and FIG. 8, a main circuit of the inverter 200 includes an inverter circuit 202 and at least one Boost circuit 201. The number of the at least one Boost circuit 201 in the inverter 200 may be m (Boost 1 to Boost m shown in FIG. 8), where m is a positive integer greater than or equal to 1.

In practice, the input end of each Boost circuit 201 may be connected to one connection port of the direct-current side of the inverter 200, or may be connected to at least two connection ports connected in parallel at the direct-current side of the inverter 200. Different Boost circuits 201 may be identical to or different from each other in configurations of the input end, depending on the actual application environment. All implementations fall within the protection scope of the present disclosure. The connection port connected to the input end of each Boost circuit 201 may be connected to one photovoltaic string 100, or may be connected in parallel to at least two photovoltaic strings 100 through a bus bar terminal, depending on the actual application environment. All implementations fall within the protection scope of the present disclosure.

In an embodiment, each Boost circuit 201 includes one input end, and the input end may be referred to as an MPPT port. Each MPPT port may be separated into two connection ports that are connected in parallel inside the inverter 200. The connection port may be referred to as PV ports. Alternatively, each MPPT port may directly serve as a PV port. Each PV port may be connected to one photovoltaic string 100, or may be connected to two photovoltaic strings 100 connected in parallel through a bus bar terminal. The number of the photovoltaic string 100 in the photovoltaic system is at least one.

Referring to FIG. 7 and FIG. 8, it is assumed that each photovoltaic string 100 includes n photovoltaic modules (photovoltaic module 1 to photovoltaic module n as shown in FIG. 7 and FIG. 8), n is a positive integer greater than or equal to 2. n is less than or equal to 25 in a case that the inverter 200 is a single-phase inverter. n is less than or equal to 35 in a case that the inverter 200 is a three-phase inverter. Since each photovoltaic component is provided with an optimizer 102 in the photovoltaic system, each photovoltaic module includes a photovoltaic unit and an optimizer 102. The photovoltaic unit includes at least one photovoltaic component 101. The photovoltaic unit is connected to the input end of the optimizer 102. Output terminals of all optimizers 102 in the photovoltaic string 100 are connected in series. That is, a positive output terminal of an optimizer 102 is connected to a negative output terminal of a previous optimizer 102, and a negative output terminal of the optimizer 102 is connected to a positive output terminal of a next optimizer 102. A negative output terminal of the last optimizer in the photovoltaic string is connected to a PV port of the inverter 200.

It should be noted that, in the photovoltaic system, the number of the photovoltaic module may be different in different photovoltaic strings 100, photovoltaic strings 100 connected to different MPPT ports may be different in connection manner, where the connection manner may be a series connection or a parallel connection, and photovoltaic units may be different in power.

In practice, referring to FIG. 8, k photovoltaic strings 100 (photovoltaic string 1 to photovoltaic string k as shown in FIG. 8) are connected to m Boost circuits 201 of an inverter 200. The MPPT port of each Boost circuit 201 may be connected to zero photovoltaic strings, or may be connected one to three photovoltaic strings 100, which depends on the actual application environment and falls within the protection scope of the present disclosure.

The same or similar parts among the embodiments in the present disclosure may be referred to each other, and each of the embodiments emphasizes differences from other embodiments. In particular, the system or system embodiment is substantially similar to the method embodiment, and therefore is described relatively briefly. For relevant details, reference can be made to the description of the method embodiment. The system and system embodiments described above are only illustrative, in which the units described as separate components may or may not be physically separated, and the components shown as units may or may not be physical units, that is, may be located in one place, or distributed over multiple network elements. Some or all of the modules may be selected as needed to achieve the purpose of the solution of the embodiments. Those skilled in the art can understand and implement the solution without any creative effort.

Those skilled in the art may further realize that the units and algorithm steps of each example described in conjunction with the embodiments disclosed herein can be implemented by electronic hardware, computer software, or a combination of both. In order to clearly illustrate the interchangeability of hardware and software, the components and steps of each example have been described in general terms of functionality in the above description. Whether these functions are performed in hardware or software depends on the specific application and design constraints of the technical solution. Those skilled in the art may implement the described functionality in various manners for each specific application, while such implementations should not be considered to be beyond the scope of the present disclosure.

Based on the above description of the disclosed embodiments, the features described in the different embodiments in the present disclosure may be replaced or combined with each other, so that those skilled in the art can implement or use the present disclosure. Various modifications to these embodiments will be apparent by those skilled in the art, and the generic principles defined herein may be implemented in other embodiments without departing from the spirit or scope of the present disclosure. Therefore, the present disclosure is not limited to the embodiments described herein, but should be in accordance with the broadest scope consistent with the principle and novel features disclosed herein.

## Claims

1. An optimizer networking method for a photovoltaic system, **characterized in that** the photovoltaic system comprises an inverter and photovoltaic strings connected to Boost circuits at a preceding stage of a direct-current bus of the inverter, and the optimizer networking method comprises:
controlling, by the inverter, optimizers to start;
performing, by the inverter, an IV scan operation on the Boost circuits one by one;
determining, by each of the optimizers, a Boost circuit connected to the optimizer based on output characteristics of the optimizer during respective IV scan operations; and
obtaining, by the inverter, determination results from the optimizers, to obtain a correspondence between the Boost circuits and the optimizers.

2. The optimizer networking method for a photovoltaic system according to claim 1, wherein the output characteristic comprises at least one of a disturbance characteristic of an output voltage and a disturbance characteristic of an output current.

3. The optimizer networking method for a photovoltaic system according to claim 1, wherein the determining, by each of the optimizers, a Boost circuit connected to the optimizer based on output characteristics of the optimizer during respective IV scan operations comprises:
for each of the optimizers,
receiving, by the optimizer from the inverter, a topology determination instruction and Boost channel numbers of the respective Boost circuits in the respective IV scan operations;
determining, by the optimizer, the Boost channel number of the Boost circuit connected to the optimizer based on the output characteristics of the optimizer; and
storing, by the optimizer, the determined Boost channel number.

4. The optimizer networking method for a photovoltaic system according to claim 3, wherein before the performing, by the inverter, an IV scan operation on the Boost circuits one by one, the optimizer networking method further comprises:
controlling, by the inverter, each optimizer to clear the Boost channel number stored by the optimizer.

5. The optimizer networking method for a photovoltaic system according to claim 1, wherein before the performing, by the inverter, an IV scan operation on the Boost circuits one by one, the optimizer networking method further comprises:
controlling the inverter to operate in a grid-connected state.

6. The optimizer networking method for a photovoltaic system according to claim 5, wherein during the performing, by the inverter, an IV scan operation on each of the Boost circuits, the optimizer networking method further comprises:
setting, by the inverter, at least one of an output voltage limit and an output current limit for each optimizer to satisfy an IV scan condition.

7. The optimizer networking method for a photovoltaic system according to claim 1, wherein the controlling, by the inverter, optimizers to start comprises:
for each of the optimizers,
sending, by the inverter, an activation instruction to the optimizer to enable the optimizer to be in an operating mode; and
performing a soft start on the optimizer to increase an output voltage of the optimizer.

8. The optimizer networking method for a photovoltaic system according to claim 7, wherein during the controlling, by the inverter, optimizers to start, the optimizer networking method further comprises:
setting, by the inverter, at least one of an output voltage limit and an output current limit for each optimizer;
for each of two preset values, obtaining, by the inverter, a voltage at an input end of each of the Boost circuits when the output voltage of each optimizer stabilizes at the preset value; and
determining, by the inverter based on a variation of the voltage at the input end of each of the Boost circuits, whether each photovoltaic component in the photovoltaic string connected to the Boost circuit is provided with an optimizer.

9. The optimizer networking method for a photovoltaic system according to any one of claims 1 to 8, wherein after obtaining the correspondence between the Boost circuits and the optimizers, the optimizer networking method further comprises:
performing, by the inverter, a pulse blocking operation on the Boost circuits one by one; and
during the pulse blocking operation on each of the Boost circuits,
changing, by the inverter, an output voltage of one of the optimizers connected to the Boost circuit at least once; and determining the photovoltaic string corresponding to each of the optimizers based on an electrical state of the optimizer.

10. The optimizer networking method for a photovoltaic system according to claim 9, wherein the changing the output voltage comprises active bypass,
wherein the electrical state is an output current.

11. The optimizer networking method for a photovoltaic system according to any one of claims 1 to 8, wherein before the controlling, by the inverter, optimizers to start, the optimizer networking method further comprises:
performing, by the inverter, communication association numbering configuration on each of the optimizers.

12. The optimizer networking method for a photovoltaic system according to any one of claims 1 to 8, wherein before the controlling, by the inverter, optimizers to start, the optimizer networking method further comprises:
obtaining, by the inverter, serial numbers of the optimizers;
determining, by the inverter, whether manually entered topological positions are received, wherein the process of controlling, by the inverter, optimizers to start is performed when the topological positions are not received; and
determining by the inverter, when the topological positions are received, whether the serial numbers match the topological positions, wherein the process of controlling, by the inverter, optimizers to start is performed when the serial numbers do not match the topological positions.

13. The optimizer networking method for a photovoltaic system according to any one of claims 1 to 8, wherein before the controlling, by the inverter, optimizers to start, the optimizer networking method further comprises:
obtaining, by the inverter, serial numbers of the optimizers;
determining, by the inverter, whether there is a serial number that is not previously stored among the serial numbers;
determining by the inverter, when there is the serial number that is not previously stored, whether the number of the serial number that is not previously stored is less than a predetermined number or whether the inverter operates in a grid-connected state,
wherein the process of controlling, by the inverter, optimizers to start is performed when the number of the serial number that is not previously stored is less than the predetermined number or the inverter operates in the grid-connected state.

14. A photovoltaic system, comprising an inverter and at least one photovoltaic string, **characterized in that**,
the at least one photovoltaic string each is provided with at least one optimizer at two terminals of the photovoltaic string, output terminals of the at least one optimizer are connected in series, and an input end of the at least one optimizer is connected to at least one photovoltaic component;
a preceding stage of a direct-current bus of the inverter is configured to connect to at least one Boost circuit, and an input end of each of the at least one Boost circuit is configured to connect to the at least one photovoltaic string; and
the inverter comprises a controller serving as a master node to communicate with the at least one optimizer, and the controller is configured to perform the optimizer networking method for a photovoltaic system according to any one of claims 1 to 13.

15. The photovoltaic system according to claim 14, wherein
the at least one Boost circuit each is independent of the inverter; or
the at least one Boost circuit each is integrated in the inverter, and an output end of the Boost circuit is connected to a direct-current side of an inverter circuit in the inverter through the direct-current bus.
